# EUROPÄISCHE PATENTSCHRIFT

(11) **EP 1 302 141 B1**
(45) Veröffentlichungstag und Bekanntmachung des Hinweises auf die Patenterteilung: **10.08.2005**
(21) Anmeldenummer: 02405833.1
(22) Anmeldetag: 26.09.2002
(51) Int. Cl.: A47J 31/54, A47J 31/36, A47J 31/46

(54) **Vorrichtung zur Herstellung von Heissgetränken**
Device for preparing hot beverages
Dispositif pour la préparation de boissons chaudes

(30) Priorität: 09.10.2001 CH 19262001; 23.04.2002 CH 6902002
(43) Veröffentlichungstag der Anmeldung: 16.04.2003
(73) Patentinhaber: Fianara International B.V., 1079 LH Amsterdam (NL)
(72) Erfinder: Turi, Mariano, 8046 Zürich (CH)
(74) Vertreter: Rottmann, Maximilian R.

(56) Entgegenhaltungen:
- EP-A- 0 307 955
- WO-A-99/22629
- US-A- 3 604 335
- US-A- 4 102 255
- US-A- 5 357 848
- US-A- 6 161 469

## Beschreibung

Die Erfindung betrifft eine Vorrichtung zur Herstellung von Heissgetränken gemäss dem Oberbegriff des Anspruchs 1.

Verfahren zur Herstellung von Heissgetränken durch Aufbrühen einer partikelförmigen, mittels Wasser extrahierbaren Substanz sind in verschiedensten Formen bekannt. Diesbezüglich seien beispielsweise Espressokaffeemaschinen erwähnt, bei denen gemahlenes Kaffeepulver einer Brühkammer zugeführt wird. Das Kaffeepulver wird in der Brühkammer verdichtet und danach vom Brühwasser unter Druck durchströmt und extrahiert.

Bei herkömmlichen Espresso-Kaffeemaschinen wird das in der Brühkammer aufgenommene Kaffeepulver von Brühwasser mit einer Temperatur von ca. 85-98°C durchströmt. Aus diesem Grund wird das Brühwasser im Wassererhitzer auf die vorgenannte Temperatur erhitzt. Um mit einer derartigen Kaffeemaschine auch Dampf erzeugen zu können, muss der Wassererhitzer auf über 100°C erhitzt werden oder die Kaffeemaschine muss mit einem zweiten Wassererhitzer versehen sein, welcher, zur verzögerungsfreien Dampfabgabe, ständig auf einer Temperatur von über 100°C gehalten wird. Während im ersten Fall die Dampfausgabe mit einer bestimmten Verzögerung erfolgt, da die Masse des Wassererhitzers zuerst auf die gewünschte Temperatur gebracht werden muss, ist im zweiten Fall die nahezu verzögerungsfreie Dampfausgabe nur mit einem erheblichen Mehraufwand zu realisieren. Beim ersten Beispiel besteht ein weiterer Nachteil darin, dass der Wassererhitzer nach der Erzeugung von Dampf zuerst wieder auf eine Temperatur von unter 100°C abgekühlt werden muss, bevor damit Wasser zum Aufbrühen eines Kaffees erhitzt werden kann.

Aus der WO 99 22629 ist eine halbautomatische Espressokaffeemaschine bekannt, die mit einem manuell einsetzbaren Filterträger versehen ist. Die Kaffeemaschine weist einen geschlossenen Wasserkreislauf auf, in dem ein von einem Boiler umgebener Wärmetauscher angeordnet ist. Im weiteren ist eine Ausgabeeinheit vorgesehen, welche vom Frischwasser durchströmt wird. Der Boiler erhitzt das darin aufgenommenen Wasser auf ca. 120°C. Das aufzubrühende Frischwasser wird dem Wärmetauscher auf nicht näher spezifizierte Weise zugeführt wo es auf eine Temperatur von unter 100°C abgekühlt wird. Dadurch soll erreicht werden, dass das auf ca. 120°C erhitzte Brühwasser kontrolliert auf eine optimale Brühtemperatur von beispielsweise 92°C abgekühlt wird. Ein Dampfauslass ist bei dieser Kaffeemaschine nicht vorgesehen.

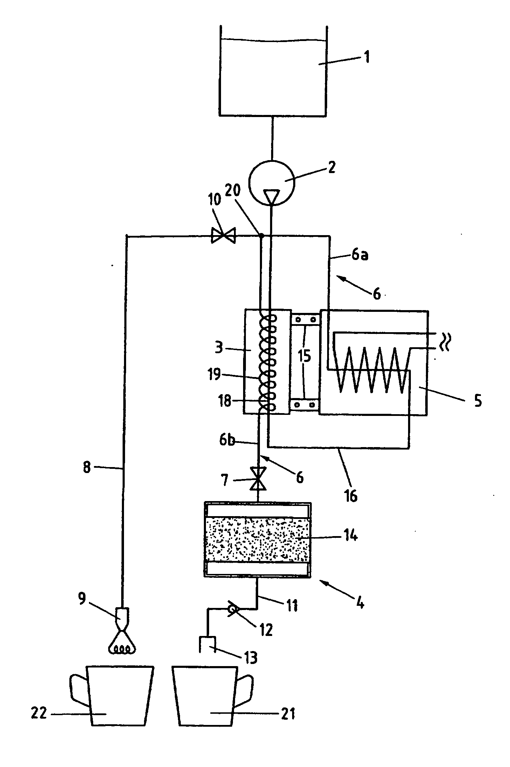

Aus der US 5 357 848 geht eine Filter-Kaffeemaschine hervor, die mit einem Heizblock mit zwei Durchlauferhitzern versehen ist. Beide Durchlauferhitzer sind über ein Zwie-Wege-Ventil mit dem Frischwassertank verbunden. Der erste Durchlauferhitzer dient dem Erhitzen von Brühwasser. Dazu ist der Auslass des erste Durchlauferhitzers mit einem Steigrohr verbunden, an dessen Ende ein Brühkopf angeordnet ist. Der zweite Durchlauferhitzer ist mit einer Dampfdüse verbunden und zum Erzeugen von Dampf vorgesehen. Zwischen dem Frischwassertank und dem Einlass des zweiten Durchlauferhitzers ist eine Pumpe 10 angeordnet. Diese Pumpe dient dem dosierten Zuführen einer derart geringen Wassermenge, dass das Wasser im Durchlauferhitzer sofort verdampft und trockener Dampf aus der Dampfdüse ausgestossen wird. Bei dem Ausführungsbeispiel gemäss Fig. 3 ist nur ein Durchlauferhitzer zum Erzeugen von Brühwasser und Dampf vorgesehen. Zum Erzeugen von Dampf ist auch in diesem Fall eine Dosierpumpe vorgesehen. Der grundsätzlichen Nachteil bei beiden Ausführungsbeispielen ist darin zu sehen, dass das Erzeugen von Dampf immer verzögert erfolgt.

Ausgehend vom genannten Stand der Technik besteht die Aufgabe der Erfindung darin, eine Vorrichtung zur Herstellung von Heissgetränken gemäss dem Oberbegriff des Anspruchs 1 vorzuschlagen, welche einfach aufgebaut und kostengünstig realisierbar ist und mittels welcher bei Bedarf eine praktisch verzögerungsfreie Dampfausgabe erfolgen kann.

Diese Aufgabe wird durch die im Kennzeichen des Anspruchs 1 angeführten Merkmale gelöst.

Bevorzugte Ausbildungen der Vorrichtung sind in den abhängigen Ansprüchen 2 bis 7 näher umschrieben.

Die Erfindung wird nachfolgend anhand einer Zeichnung näher erläutert.

Aus der einzigen Zeichnung geht eine schematisch dargestellte Vorrichtung zur Herstellung von Heissgetränken durch Aufbrühen einer partikelförmigen, mittels Wasser extrahierbaren Substanz hervor. Diese Vorrichtung weist im wesentlichen einen Frischwassertank 1, eine Förderpumpe 2, einen Wärmetauscher 3, eine Brühkammer 4, einen Wassererhitzer 5, eine Brühwasserleitung 6, eine Dampfleitung 8 mit einem Dampfauslass 9 und einem Sperrventil 10, sowie eine Getränkeleitung 11 mit einem als Überdruckventil wirkenden Rückschlagventil 12 und einem Getränkeauslass 13 auf.

Die Funktionsweise dieser Vorrichtung bei der Getränkeerzeugung stellt sich wie folgt dar (Ventil 7 geöffnet, Ventil 10 geschlossen): Mittels der Pumpe 2 wird frisches Wasser vom Frischwassertank 1 gefördert. Dieses kalte Wasser durchströmt zuerst den Wärmetauscher 3 über einen Kaltwasserdurchlauf 18 um danach über eine Leitung 16 in den Wassererhitzer 5 zu gelangen, in welchem es auf eine Temperatur oberhalb des normalen Siedepunkts erhitzt wird. Unter normalem Siedepunkt ist der Siedepunkt des Wassers bei normalem Luftdruck (1013 hPa auf Meereshöhe) zu verstehen. Bevorzugterweise wird das Wasser im Wassererhitzer 5 auf eine Temperatur zwischen ca. 110°C und 130°C erhitzt. Vom Wassererhitzer 5 gelangt das heisse Brühwasser über den ersten Abschnitt 6a der Brühwasserleitung 6 zu dem vom Frischwasser gekühlten Wärmetauscher 3, wo es auf eine Temperatur unterhalb des normalen Siedepunkts bzw. auf unter 100°C abgekühlt wird. Vom Wärmetauscher 3 strömt das Brühwasser über den zweiten Abschnitt der Brühwasserleitung 6b zu der Brühkammer 4, wo es die darin aufgenommene Substanz 14 extrahiert. Das aufgebrühte Getränk strömt danach über die Getränkeleitung 11 zu dem Getränkeauslass 13, von wo es in ein bereitgestelltes Getränkegefäss 21 einfliessen kann. Durch das als Überdruckventil wirkende Rückschlagventil 12 wird sichergestellt, dass der Druck in der Brühwasserleitung 6 so hoch ist, dass das Brühwasser unter Druck steht und auch im ersten Abschnitt 6a der Brühwasserleitung 6, in dem es eine Temperatur oberhalb des normalen Siedepunkts aufweist, den flüssigen Aggregatszustand beibehält.

Um Dampf entnehmen zu können, wird das Ventil 7 geschlossen und das Ventil 10 geöffnet. Die beiden Ventile 7, 10 können dazu mechanisch oder elektrisch miteinander gekoppelt sein. Das über den normalen Siedepunkt hinaus erhitzte Wasser kann nun über ein T-förmiges Abzweigstück 20 aus dem ersten Abschnitt 6a der Brühwasserleitung 6 in die Dampfleitung 8 einströmen. Da in der Leitung 8 kein Rückschlagventil bzw. Überdruckventil angeordnet ist, nimmt das über den normalen Siedepunkt hinaus erhitzte Wasser in der Dampfleitung 8 den gasförmigen Aggregatszustand ein, so dass am Dampfauslass 9 Dampf zur Verfügung steht. Da das Wasser im Wassererhitzer 5 immer über den Siedepunkt hinaus erhitzt wird, steht sofort Dampf zur Verfügung, wenn das Ventil 10 geöffnet wird. Mit diesem Dampf kann beispielsweise die in einer Tasse 22 aufgenommene Flüssigkeit erwärmt werden.

Der Wärmetauscher 3 ist über Verbindungselemente 15 mit dem Wassererhitzer 5 verbunden. Diese Verbindungselemente 15 sind dazu da, den Wärmetauscher 3 auf eine bestimmte Temperatur vorzuheizen. Dadurch kann der beim Aufbrühen eines ersten Getränks durch die Vielzahl von zu erwärmenden Elementen wie Leitungen 6, 11, Brühkammer 4, Überdruckventil 12 etc. entstehende Wärmeverlust kompensiert werden. Werden mehrere Getränke nacheinander aufgebrüht, so sind die genannten Elemente schon vorgewärmt und der Wärmeverlust ist entsprechend geringer. Die Wärmekopplung zwischen dem Wärmetauscher 3 und dem Wassererhitzer 5 trägt diesem Umstand Rechnung.

Die vorliegende Vorrichtung zur Herstellung von Heissgetränken ist einfach aufgebaut und kann kostengünstig realisiert werden. Sie eignet sich insbesondere zur Herstellung von Espressokaffee. Allerdings können natürlich auch andere Heissgetränke wie beispielsweise Tee, Schokolade, Suppen etc. damit hergestellt werden.

## Patentansprüche

1. Vorrichtung zur Herstellung von Heissgetränken, insbesondere von Espressokaffee, durch Aufbrühen einer partikelförmigen, mittels Wasser extrahierbaren Substanz, mit einer Frischwasserquelle (1), einer Förderpumpe (2), einem Wassererhitzer (5), der das Brühwasser über den normalen Siedepunkt hinaus erhitzt und über eine Brühwasserleitung (6) mit einer Brühkammer (4) verbunden ist, einem in der Brühwasserleitung (6) zwischen dem Wassererhitzer (5) und der Brühkammer (4) angeordneten Wärmetauscher (3) zum Abkühlen des Brühwassers auf eine Temperatur unterhalb des normalen Siedepunkts sowie einem Getränkeauslass (13), **dadurch gekennzeichnet, dass** zwischen dem Wassererhitzer (5) und dem Wärmetauscher (3) eine mittels eines Ventils (10) verschliessbare Dampfleitung (8) zur Entnahme von Dampf von der Brühwasserleitung (6) abzweigt und dass zwischen dem Wärmetauscher (3) und dem Getränkeauslass (13) ein Überdruckventil (12) angeordnet ist.

2. Vorrichtung nach Anspruch 1, **dadurch gekennzeichnet, dass** das Überdruckventil (12) zwischen der Brühkammer (4) und dem Getränkeauslass (13) angeordnet ist.

3. Vorrichtung nach Anspruch 1 oder 2, **dadurch gekennzeichnet, dass** das Überdruckventil (12) derart ausgelegt ist, dass das in der Brühwasserleitung (6) zirkulierende, über den normalen Siedepunkt hinaus erhitzte Brühwasser den flüssigen Aggregatszustand beibehält.

4. Vorrichtung nach einem der vorhergehenden Ansprüche, **dadurch gekennzeichnet, dass** der Wärmetauscher (3) einen Kaltwasserdurchlauf (18) und einen Heisswasserdurchlauf (19) aufweist, wobei der Einlass des Kaltwasserdurchlaufs (18) mit der Frischwasserquelle (1) und der Auslass mit dem Wassererhitzer (5) verbunden ist.

5. Vorrichtung nach Anspruch 4, **dadurch gekennzeichnet, dass** der Heisswasserdurchlauf (19) des Wärmetauschers (3) als Teil der Brühwasserleitung (6) ausgebildet ist.

6. Vorrichtung nach einem der vorhergehenden Ansprüche, **dadurch gekennzeichnet, dass** in der Brühwasserleitung (6) ein Ventil (7) zum Verschliessen derselben angeordnet ist.

7. Vorrichtung nach einem der vorhergehenden Ansprüche, **dadurch gekennzeichnet, dass** der Wärmetauscher (3) mit dem Wassererhitzer (5) thermisch verbunden ist.

## Claims

1. Apparatus for preparing hot beverages, in particular espresso coffee, by brewing a particulate substance which can be extracted using water, having a fresh-water source (1), a feed pump (2), a water heater (5) which heats the brewing water to above the normal boiling point and is connected to a brewing chamber (4) by means of a brewing-water line (6), a heat exchanger (3) which is arranged in the brewing-water line (6) between the water heater (5) and the brewing chamber (4) and serves the purpose of cooling the brewing water down to a temperature below the normal boiling point, and a beverage outlet (13), **characterized in that** a steam line (8) which can be closed by means of a valve (10) and serves the purpose of removing steam branches off from the brewing-water line (6) between the water heater (5) and the heat exchanger (3), and **in that** a pressure relief valve (12) is arranged between the heat exchanger (3) and the beverage outlet (13).

2. Apparatus according to Claim 1, **characterized in that** the pressure relief valve (12) is arranged between the brewing chamber (4) and the beverage outlet (13).

3. Apparatus according to Claim 1 or 2, **characterized in that** the pressure relief valve (12) is designed in such a way that the brewing water which is heated to above the normal boiling point and circulates in the brewing-water line (6) maintains the liquid state.

4. Apparatus according to one of the preceding claims, **characterized in that** the heat exchanger (3) has a cold-water throughflow line (18) and a hot-water throughflow line (19), the inlet of the cold-water throughflow line (18) being connected to the fresh-water source (1) and the outlet being connected to the water heater (5).

5. Apparatus according to Claim 4, **characterized in that** the hot-water throughflow line (19) of the heat exchanger (3) is part of the brewing-water line (6).

6. Apparatus according to one of the preceding claims, **characterized in that** a valve (7) for closing the brewing-water line (6) is arranged in the said brewing-water line.

7. Apparatus according to one of the preceding claims, **characterized in that** the heat exchanger (3) is thermally connected to the water heater (5).

## Revendications

1. Dispositif de préparation de boissons chaudes, en particulier de café expresso, par infusion d'une substance sous forme de particules extractible à l'eau, avec une source d'eau fraîche (1), une pompe d'alimentation (2), un chauffe-eau (5) qui chauffe l'eau d'infusion au-delà du point d'ébullition normal et est relié à un compartiment d'infusion (4) via une conduite d'eau d'infusion (6), un échangeur de chaleur (3) disposé dans la conduite d'eau d'infusion (6) entre le chauffe-eau (5) et le compartiment d'infusion (4) pour refroidir l'eau d'infusion à une température inférieure au point d'ébullition normale, ainsi qu'une sortie de boisson (13), **caractérisé en que**, entre le chauffe-eau (5) et l'échangeur de chaleur (3) une conduite de vapeur (8) pouvant être fermée à l'aide d'une soupape (10) bifurque pour le prélèvement de vapeur depuis la conduite d'eau d'infusion (6), et en ce qu'une soupape de surpression (12) est disposée entre l'échangeur de chaleur (3) et la sortie de boisson (13).

2. Dispositif selon la revendication 1, **caractérisé en ce que** la soupape de surpression (12) est disposée entre le compartiment d'infusion (4) et la sortie de boisson (13).

3. Dispositif selon la revendication 1 ou 2, **caractérisé en ce que** la soupape de surpression (12) est conçue de telle manière que l'eau d'infusion chauffée au-delà du point d'ébullition normal qui circule dans la conduite d'eau d'infusion (6) conserve l'état d'agrégat liquide.

4. Dispositif selon une des revendications précédentes, **caractérisé en ce que** l'échangeur de chaleur (3) comporte un passage d'eau froide (18) et un passage d'eau chaude (19), l'entrée du passage d'eau froide (18) étant reliée à la source d'eau fraîche (1) et la sortie au chauffe-eau (5).

5. Dispositif selon la revendication 4, **caractérisé en ce que** le passage d'eau chaude (19) de l'échangeur de chaleur (3) est réalisé comme une partie de la conduite d'eau d'infusion (6).

6. Dispositif selon une des revendications précédentes, **caractérisé en ce qu'**une soupape (7) destinée à fermer la conduite d'eau d'infusion (6) est disposée dans cette dernière.

7. Dispositif selon une des revendications précédentes, **caractérisé en ce que** l'échangeur de chaleur (3) est relié thermiquement au chauffe-eau (5).
